Europäisches Patentamt

European Patent Office

Office européen des brevets

(11) Numéro de publication: **0 353 113**
**A1**

## DEMANDE DE BREVET EUROPEEN

(21) Numéro de dépôt: **89401798.7**

(22) Date de dépôt: **23.06.89**

(51) Int. Cl.5: **A 01 K 13/00**

(30) Priorité: **24.06.88 FR 8808506**

(43) Date de publication de la demande:
**31.01.90 Bulletin 90/05**

(84) Etats contractants désignés:
**BE CH DE ES FR GB IT LI NL SE**

(71) Demandeur: **SOCIETE HELLEBORE**
**Z.I. des Coursannes**
**F-37140 Bourgueil (FR)**

(72) Inventeur: **SOCIETE HELLEBORE**
**Z.I. des Coursannes**
**F-37140 Bourgueil (FR)**

Le titre de l'invention a été modifié (Directives relatives à l'examen pratiqué à l'OEB, A-III, 7.3)

(54) **Couverture ventrale pour équidés.**

(57) La couverture se présente sous la forme générale d'un triangle dont l'un des sommets (1), dirigé entre les membres antérieurs, comporte des moyens de fixation avant (10, 11) susceptibles de coopérer avec les pans avant de la couverture dorsale ou une courroie passant sur le cou de l'animal. Les deux autres sommets (2, 3) portent des moyens de fixation arrière (4, 5) coopérant avec la couverture dorsale comme sangle. Le sommet avant (1) se prolonge par une patte (6) élargie en forme de triangle dont les sommets (8, 9) s'attachent à la couverture dorsale ou à une courroie.

FIG 1.

Bundesdruckerei Berlin

EP 0 353 113 A1

## Description

## COUVERTURE VENTRALE POUR EQUIDES

L'invention concerne une couverture ventrale pour équidés et en particulier pour chevaux, ladite couverture protégeant au moins partiellement le thorax et le ventre de l'animal.

On connait des couvertures dorsales qui viennent recouvrir le dos et au moins une partie des reins d'un animal laissant en particulier la partie ventrale du corps libre. De telles couvertures sont généralement utilisées sur des animaux de grande taille, comme les équidés, et ont pour fonction de protéger l'animal d'un refroidissement dû aux conditions climatiques, ou à la suite d'un effort. Certaines de ces couvertures comportent des parties accessoires, indépendantes ou partiellement indépendantes susceptibles de protéger le bas du cou et connues sous les noms de poitrail et faux poitrail. Le poitrail est une pièce amovible qui est fixée à l'avant de la couverture, tandis que le faux poitrail se présente sous la forme d'une patte large fixée par une de ses extrémités à un pan de la couverture et dont l'autre extrémité vient s'attacher sur l'autre pan en passant devant le bas du cou.

Il est apparu nécessaire de protéger non seulement le bas de cou mais également la cage thoracique et le ventre qui sont des parties fragiles et que, généralement, les pans flottants de la couverture dorsale ne suffisent pas à protéger du vent ou du froid.

En outre, une telle couverture peut être utilisée dans un but thérapeutique afin d'éviter les ennuis intestinaux d'animaux "fragiles du ventre" et peut également servir au maintien de pansements ou à la protection de ceux-ci contre les souillures.

La couverture ventrale, selon l'invention, est remarquable en ce qu'elle a une forme sensiblement triangulaire, l'un des sommets dirigé entre les membres antérieurs comporte des moyens de fixation avant, les deux autres sommets, remontant sur les flancs de l'animal, portent des moyens de fixation arrière.

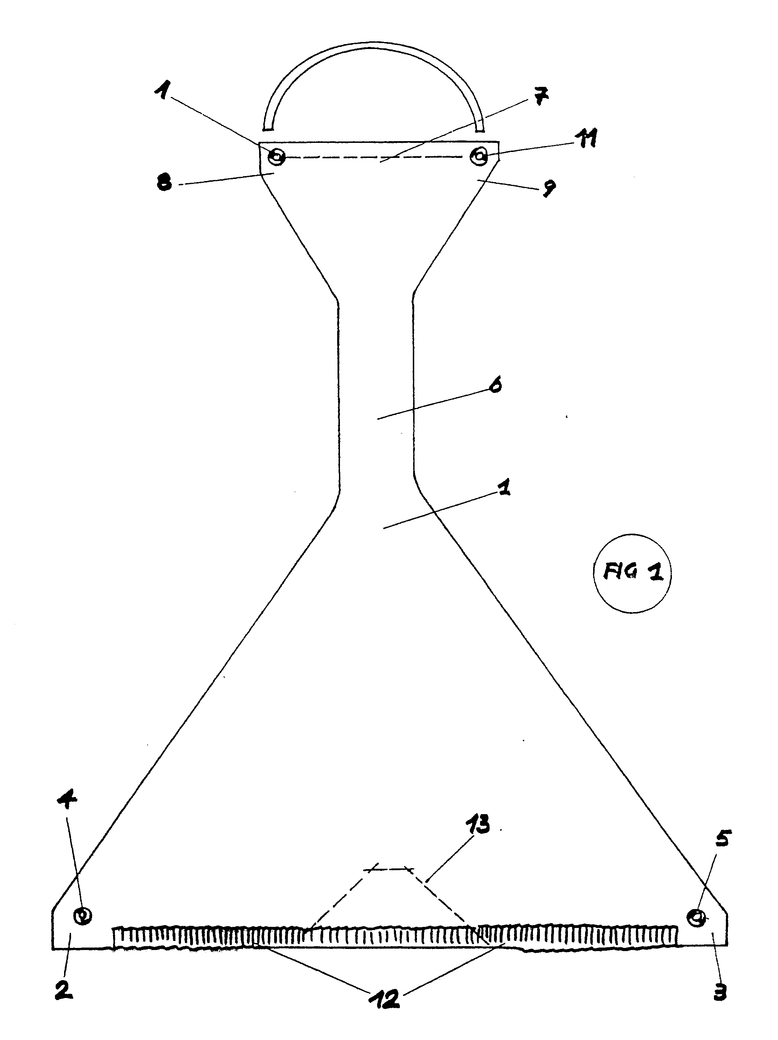

Les explications et la figure données ci-après, à titre d'exemple, permettront de comprendre comment l'invention peut être réalisée.

La figure unique montre un exemple de réalisation d'une couverture ventrale selon l'invention.

La couverture ventrale, selon l'invention, se présente sous la forme générale d'un triangle, découpé dans une feuille d'un matériau souple tissé ou non.

Un des sommets du triangle 1, dirigé vers les antérieurs de l'animal comporte des moyens de fixation avant qui seront ci-après décrits. Les deux autres sommets 2 et 3, destinés à remonter le long des flancs et partiellement sur la partie ventrale de l'animal portent des moyens de fixation arrière 4 et 5. Ces moyens de fixation sont constitués de tout dispositif connu, tels qu'oeillets, boucles, bandes auto-grippantes, etc... et viennent coopérer avec des moyens de fixation complémentaires prévus sur les pans de la couverture dorsale ou avec une sangle ou une courroie passant sur l'arrière de l'animal.

Selon différentes formes de réalisation :
Le sommet 1 dirigé entre les membres antérieurs est muni de moyens de fixation coopérant, par exemple, avec les pans avant de la couverture dorsale, ou avec une courroie passant sur l'encolure de l'animal.

Suivant la forme de réalisation montrée sur la figure, le sommet 1 est prolongé par une patte 6 passant entre les membres antérieurs et suffisamment étroite pour ne pas gêner les mouvements. L'extrémité libre de cette patte est munie des moyens de fixation tels que précédemment décrits pour s'accrocher à la couverture dorsale, ou à une courroie passant sur le cou de l'animal.

Dans l'exemple représenté l'extrémité libre de la patte 6 s'élargit en forme de triangle 7 dont les sommets 8 et 9 portent les moyens de fixation 10 et 11. Suivant la dimension de l'extrémité 7, celle-ci peut former un poitrail pour protéger le bas du cou de l'animal et venir se fixer sur les pans de la couverture dorsale, ou à une courroie passant sur le cou de l'animal.

Afin d'améliorer le contact de la couverture avec le corps de l'animal principalement dans la région ventrale, on prévoit sur le bord reliant les sommets 2 et 3, une partie élastique 12.

Suivant la longueur de la couverture et de préférence lorsque celle-ci doit équiper un cheval, on forme une découpe centrale 13, montrée en trait interrompu, sur le bord 2,3 de la couverture afin de ne pas gêner le cheval. Dans ce cas la partie élastique 12 est séparée en deux parties ou est prévue en avant de la découpe.

Les matériaux utilisés pour la réalisation de ladite couverture sont des tissus de texture et d'épaisseur variées adaptées, semblables à ceux utilisés pour les couvertures dorsales.

La couverture est également constituée d'une étoffe doublée d'une pellicule synthétique permettant l'aération tout en empêchant le passage de l'air extérieur.

## Claims

1) Couverture ventrale pour équidés, en particulier pour chevaux, la dite couverture protégeant au moins partiellement le thorax et le ventre de l'animal, caractérisée en qu'elle a la forme générale d'un triangle, un des sommet (1) du triangle dirigé vers les antérieurs de l'animal et prolongé par une patte (6) passant entre les membres antérieurs et portant à son extrémité libre des moyens de fixation avant, les deux autres sommets (2) et (3) remontent sur les flencs de l'animal portants des moyens de fixation arrières (4) et (5).

2) Couverture selon revendication 1, caractérisé en ce que l'extrémité libre de la patte (6) s'élargit en forme de triangle (7) dont les les sommets (8,9) de la partie libre portent les moyens de fixation avant (10,11).

3) Couverture selon l'une des revendications précédentes, la dite couverture étant utilisée avec une couverture dorsale caractérisée en ce que les moyens de fixation avant (10,11) et arrière (4,5) coopérent avec des moyens de fixation complémentaires prévus sur la couverture dorsale.

4) Couverture selon l'une des revendications 1 ou 2, caractérisée en ce que les moyens de fixation avant (10,11) coopérent avec les extrémités d'une courroie passant sur le cou de l'animal.

5) Couverture selon l'une des revendications 1,2 ou 4, caractérisée en ce que les moyens de fixations arrière (4,5) coopérent avec les extrémités d'une sangle passant sur l'arrière de l'animal.

6) Couverture selon l'une des revendications précédentes caractérisée en ce que le bord du triangle reliant les sommets (2,3) portant les moyens de fixation arrière (4,5)., porte une découpe (13) centrale.

7) Couverture selon l'une des revendications précédentes, caractérisée en ce que le bord portant les moyens de fixation arrière (4,5) est muni d'une partie élastique (12).

FIG 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | BE-A-656295 (GOTSCHI) <br> * page 3, dernier alinéa – page 4, alinéa 1; figures 1-5 * <br> ---- | 1, 3 | A01K13/00 |
| A | DE-U-8631895 (WEGNER) <br> * page 5, dernier alinéa – page 6, alinéa 1; figure D * <br> ---- | 3, 7 | |
| A | US-A-3248852 (SCHWARTZ) <br> ---- | | |
| A | DE-C-356256 (WUNDER) <br> ---- | | |
| A | AU-B-85366/82 (KREBS) <br> ----- | | |

|  | DOMAINES TECHNIQUES RECHERCHES (Int. Cl.4 ) |
|---|---|
| | A01K <br> A61D |

Le présent rapport a été établi pour toutes les revendications

| Lieu de la recherche | Date d'achèvement de la recherche | Examinateur |
|---|---|---|
| LA HAYE | 06 SEPTEMBRE 1989 | VON ARX V.U. |

EPO FORM 1503 03.82 (P0402)